# EUROPÄISCHE PATENTSCHRIFT

(11) **EP 1 376 289 B1**
(45) Veröffentlichungstag und Bekanntmachung des Hinweises auf die Patenterteilung: **02.08.2006**
(21) Anmeldenummer: 03013149.4
(22) Anmeldetag: 11.06.2003
(51) Int. Cl.: G05D 16/06, F16K 31/126

(54) **Druckstellglied**
Pressure control member
Dispositif de commande de pression

(30) Priorität: 25.06.2002 DE 10228276
(43) Veröffentlichungstag der Anmeldung: 02.01.2004
(73) Patentinhaber: Dürr Systems GmbH, 70435 Stuttgart (DE)
(72) Erfinder: Buck, Thomas, 74321 Bietigheim-Bissingen (DE); Baumann, Michael, 74223 Flein (DE)
(74) Vertreter: Heusler, Wolfgang

(56) Entgegenhaltungen:
- DE-A- 4 330 483
- GB-A- 2 159 243
- US-A- 3 982 559

## Beschreibung

Die Erfindung betrifft ein Druckstellglied, insbesondere einen Farbdruckregler für eine Lackieranlage, gemäß dem Oberbegriff des Anspruchs 1.

In Lackieranlagen für Kraftfahrzeugkarosserieteile werden üblicherweise Farbdruckregler eingesetzt, um den Farbdruck beispielsweise vor einem Zerstäuber auf einen vorgegebenen Sollwert zu regeln. Derartige Farbdruckregler weisen üblicherweise eine flexible Membran auf, die eine Farbkammer gegenüber einer Steuerluftkammer abtrennt.

Die Farbkammer weist hierbei einen Zufluss mit einem Kugelventil und einen Abfluss auf, wobei das Kugelventil durch eine Feder in die Schließstellung gedrückt wird und von einem in der Mitte der Membran angeordneten Betätigungselement geöffnet werden kann.

Die Steuerluftkammer weist dagegen eine Zuleitung auf, über die der Steuerluftdruck in der Steuerluftkammer vorgegeben werden kann.

Falls nun der Steuerluftdruck in der Steuerluftkammer größer ist als die Summe aus dem Farbdruck in der Farbkammer und dem Federdruck des Kugelventils in dem Zufluss der Farbkammer, so wird die Membran mit dem Betätigungselement in Richtung des Kugelventils gedrückt, wodurch das Kugelventil entgegen der Federspannung öffnet und den Farbzufluss dadurch freigibt, bis der Farbdruck in der Farbkammer wieder auf den Sollwert angestiegen ist.

Falls der Farbdruck in der Farbkammer dagegen größer oder gleich dem Sollwert ist, so wird die Membran nicht in Richtung des Kugelventils gedrückt, so dass das Kugelventil den Farbzufluss sperrt, bis der Farbdruck in der Farbkammer wieder unter den vorgegebenen Sollwert abgesunken ist.

Der Sollwert für den Farbregeldruck entspricht hierbei also der Differenz zwischen dem Steuerluftdruck und dem zur Überwindung der Federspannung des Kugelventils erforderlichen Steuerluftdrucks.

Bei derartigen Farbdruckreglern mit einer einzigen Membran besteht jedoch die Gefahr, dass bei einer Undichtigkeit der Membran Lack oder Lösungsmittel in die Steuerluftzuführung und somit in das Pneumatiksystem der Lackieranlage eindringt.

Es sind deshalb weiterhin Farbdruckregler bekannt, die zwei separate Membranen aufweisen, um auch bei einer Undichtigkeit einer Membran zu verhindern, dass Lack oder Lösungsmittel in das Pneumatiksystem der Lackieranlage eindringen kann. Die eine Membran bildet hierbei eine Grenzfläche der Farbkammer, während die andere Membran eine Grenzfläche der Steuerluftkammer bildet, wobei die beiden Membranen mittig durch das Betätigungselement für das Kugelventil miteinander verbunden sind, um im Rahmen der Regelung eine Wechselwirkung zwischen dem Steüerluftdruck und dem Farbdruck zu ermöglichen. In den Zwischenraum zwischen den beiden Membranen mündet hierbei eine Stichbohrung, so dass eine Undichtigkeit einer oder mehrerer Membranen durch einen separaten Sensor erfasst werden kann.

Der vorstehend beschriebene Farbdruckregler mit zwei separaten Membranen bietet also zum einen eine erhöhte Leckagesicherheit gegenüber einem Eindringen von Farbe oder Lösungsmittel in das Pneumatiksystem der Lackieranlage und ermöglicht zum anderen eine verzögerungsfreie Leckerkennung.

Nachteilig an diesem bekannten Farbdruckregler mit zwei separaten Membranen ist jedoch die relativ große Bauform, was durch die zwei separat angeordneten Membranen bedingt ist.

Ein weiterer Nachteil des bekannten Farbdruckreglers ist die relativ aufwendige Mechanik sowie das gegenüber einem Farbdruckregler mit nur einer einzigen Membran schlechtere Regelverhalten.

Aus DE 43 30 483 ist ein Materialregelventil mit einer dreilagigen Membran bekannt, wobei ein Membranzwischenraum zwischen zwei der Membranschichten leckageüberwacht wird. Der leckage-überwachte Zwischenraum befindet sich hierbei jedoch auf der Steuerluftseite und nicht auf der Farbseite, was zu einer unbefriedigenden Leckagesicherheit führt.

Weiterhin sind aus US 3 982 559 und GB 2 159 243 A Druckstellglieder bekannt, die einfache bzw. doppellagige Membranen aufweisen, ohne dass auf die Anordnung des leckageüberwachten Membranzwischenraums eingegangen wird.

Weiterhin ist aus US 3 131 638 eine Membranpumpe bekannt, deren Membran drei Membranschichten aufweist, die zwei Membranzwischenräume einschließen. Hierbei münden in beide Membranzwischenräume Sensoranschlüsse, um eine Membranundichtigkeit zu detektieren.

Nachteilig an sämtlichen vorstehend erwähnten Druckstellgliedern ist die mangelnde Eignung für eine molchbare Lackieranlage. Bei einem Molchvorgang muss nämlich sichergestellt werden, dass das Zulaufventil sicher öffnet, damit der Lack in umgekehrter Richtung durch den Farbdruckregler fließen kann.

Der Erfindung liegt deshalb die Aufgabe zugrunde, den bekannten Farbdruckregler dahingehend zu verbessern, dass bei einem Molchvorgang sicher gestellt wird, dass das Kugelventil sicher öffnet, damit der Lack in umgekehrter Richtung durch den Farbdruckregler fließen kann.

Diese Aufgabe wird, ausgehend von dem eingangs beschriebenen bekannten Farbdruckregler mit zwei separaten Membranen, durch die kennzeichnenden Merkmale des Anspruchs 1 gelöst.

Die Erfindung umfasst die allgemeine technische Lehre, abweichend von dem vorstehend beschriebenen bekannten Farbdruckregler mit zwei separaten Membranen nur eine einzige Membran vorzusehen, die jedoch zwei Membranschichten aufweist, wobei zwischen den beiden Membranschichten ein Membranzwischenraum liegt, in den ein Sensoranschluss mündet, um eine Undichtigkeit der Membran durch einen Sensor detektieren zu können.

Vorzugsweise weist die Membran sogar drei Membranschichten auf, wobei die zusätzliche dritte Membranschicht auf der Seite der Steuerluftkammer angeordnet ist und die Leckagesicherheit zusätzlich erhöht.

Weiterhin ist zu erwähnen, dass die Erfindung nicht auf Farbdruckregler für den Einsatz in Lackier- oder Beschichtungsanlagen beschränkt ist. Vielmehr ist das erfindungsgemäße Prinzip einer mehrschichtigen Membran zur Erhöhung der Leckagesicherheit und einem Membranzwischenraum mit einem Sensoranschluss zur Leckageerkennung auch bei Druckstellgliedern, Ventilen oder Druckminderern anwendbar.

In einer bevorzugten Ausführungsform der Erfindung weist das Druckstellglied zwei stirnseitig aneinander anliegende Gehäuseteile auf, zwischen denen die mehrschichtige Membran eingespannt ist, wobei in einem der beiden Gehäuseteile eine Stichbohrung angeordnet ist, die innen in den Membranzwischenraum und außen in den Sensoranschluss mündet. Der Sensor für die Leckerkennung ist hierbei also nicht in dem Membranzwischenraum angeordnet, sondern außerhalb des erfindungsgemäßen Druckstellgliedes und kann an den von außen zugänglichen Sensoranschluss angeschlossen werden. Beispielsweise kann hierzu ein Drucksensor eingesetzt werden, der den Druck in dem Membranzwischenraum erfasst. Es ist jedoch alternativ auch möglich, einen Feuchtigkeits- oder Leitfähigkeitssensor einzusetzen, der auf Farb- oder Lösungsmittelflüssigkeit reagiert, die durch eine Undichtigkeit in der Membran in den Membranzwischenraum eindringt und über die Stichbohrung zu dem Sensor gelangt.

Es ist jedoch alternativ auch möglich, dass der Sensor direkt in dem Membranzwischenraum angeordnet ist und beispielsweise über eine elektrische oder faseroptische Leitung mit dem von außen zugänglichen Sensoranschluss verbunden ist.

Bei der vorstehend beschriebenen bevorzugten Ausführungsform mit zwei stirnseitig aneinander anliegenden Gehäuseteilen zwischen denen die mehrschichtige Membran eingespannt ist, befindet sich in einem der beiden Gehäuseteile an der dem anderen Gehäuseteil zugewandten Stirnseite vorzugsweise eine Vertiefung, in der die Membran angeordnet ist. Im montierten Zustand bildet diese Vertiefung mit der mehrschichtigen Membran vorzugsweise eine Presspassung oder eine Übergangspassung, um die Membran seitlich abzudichten. Die Vertiefung zur Aufnahme der mehrschichtigen Membran kann beispielsweise aus einer ringförmig umlaufenden Stufe bestehen, die an der Innenseite eines der beiden Gehäuseteile angeformt ist und in welche die mehrschichtige Membran bei der Montage eingelegt wird.

Darüber hinaus weist die mehrschichtige Membran vorzugsweise in ihrem mittleren Bereich einen Durchbruch zur Aufnahme eines Betätigungselements für ein Ventil auf, wobei das Betätigungselement vorzugsweise zwei aneinander anliegende Teile aufweist, zwischen denen die mehrschichtige Membran eingespannt ist. Das Betätigungselement weist vorzugsweise einen bezüglich der Membran axialen Vorsprung auf, der in die Farbkammer hineinragt und ein in dem Zufluss der Farbkammer angeordnetes Kugelventil öffnen kann.

Vorzugsweise sind die beiden Teile des Betätigungselementes für das Kugelventil miteinander verschraubbar, wodurch sich auch eine gute Flächenpressung im Bereich der Kontaktstelle zwischen dem Betätigungselement und der mehrschichtigen Membran erreichen lässt, was zu einer guten Dichtwirkung beiträgt. Anstelle einer Verschraubung der beiden Teile des Betätigungselementes sind jedoch_alternativ auch andere Befestigungsarten möglich.

Als Material für die mehrschichtige Membran bzw. die einzelnen Membranschichten eignet sich vorzugsweise Polytetrafluorethylen (PTFE), jedoch kann die Membran auch aus anderen Materialien bestehen.

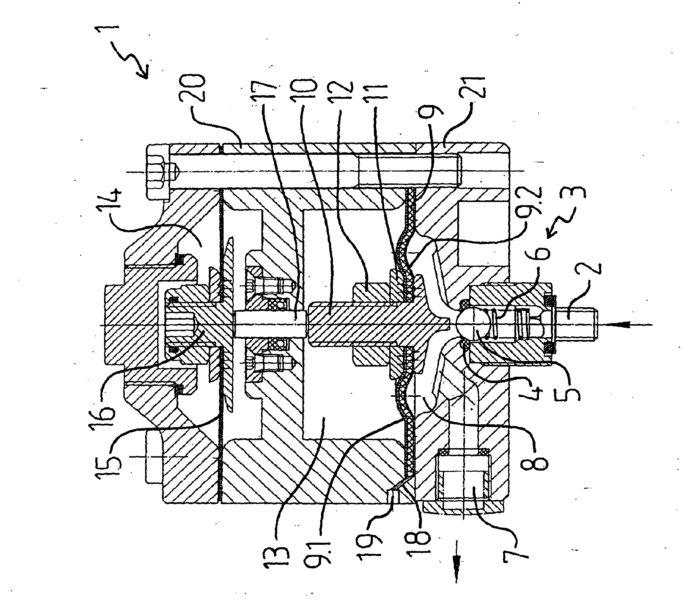

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Zeichnung näher erläutert.

Die Zeichnung zeigt eine Querschnittsansicht eines Farbdruckreglers 1, der in einer Lackieranlage für Kraftfahrzeugkarosserieteile beispielsweise vor einem Zerstäuber angeordnet sein kann, um den Farbdruck auf einen vorgegebenen Sollwert zu regeln.

Hierzu weist der Farbdruckregler 1 einen Farbzufluss 2 auf, der beispielsweise mit einem Farbwechsler verbunden sein kann.

In dem Farbzufluss 2 ist hierbei ein Kugelventil 3 angeordnet, das im Wesentlichen aus einem Dichtring 4, einer Ventilkugel 5 und einer Ventilfeder 6 besteht, wobei die Ventilfeder 6 die Ventilkugel 5 gegen den Dichtring 4 drückt und das Kugelventil 3 dadurch schließt, sofern keine äußeren Kräfte auf das Kugelventil 3 wirken. Der Farbzufluss 2 wird also von dem Kugelventil 3 gesperrt, falls keine äußeren Kräfte auf das Kugelventil 3 wirken, wie noch detailliert beschrieben wird.

Weiterhin weist der Farbdruckregler 1 einen Farbabfluss 7 auf, über den die Farbe mit einem geregelten Druck an einen Zerstäuber weitergegeben wird.

Zwischen dem Farbzufluss 2 und dem Farbabfluss 7 ist hierbei eine Farbkammer 8 angeordnet, wobei die Farbkammer 8 durch eine flexible Membran 9 begrenzt wird. Die Membran 9 weist mittig eine in axialer Richtung durchgehende Öffnung auf, in der ein Betätigungselement 10 angeordnet ist, wobei das Betätigungselement 10 an seiner Unterseite einen Vorsprung aufweist, um die Ventilkugel 5 entgegen der Kraft der Ventilfeder 6 nach unten drücken zu können.

Weiterhin weist das Betätigungselement 10 an seiner Unterseite einen umlaufenden tellerförmigen Flügel auf, auf dem der Mündungsrand der Öffnung der Membran 9 aufliegt. Oberhalb der Membran 9 ist eine Einlegescheibe 11 auf den nach oben ragenden Schaft des Betätigungsdorns 10 aufgesteckt, wobei der Schaft des Betätigungselements 10 ein Außengewinde trägt, auf das eine entsprechende Mutter aufgeschraubt ist. Die Mutter 12 drückt also die Einlegescheibe 11 gegen die Oberseite der Membran 9, wodurch die Membran 9 fest mit dem Betätigungselement 10-verbunden wird.

Oberhalb der Membran 9 befindet sich hierbei eine Steuerluftkammer 13, in der durch einen Steuerluftzufluss ein vorgegebener Steuerluftdruck eingestellt werden kann, wobei der Steuerluftzufluss in dieser Querschnittsansicht nicht erkennbar ist.

Während des Betriebs des Farbdruckreglers 1 wird in der Steuerluftkammer 13 ein vorgegebener Steuerluftdruck eingestellt, der den Sollwert für den Farbdruckregler 1 definiert. Falls nun der Farbdruck in der Farbkammer 8 größer ist als der Steuerluftdruck in der Steuerluftkammer 13, so wird die Membran 9 nach oben gedrückt, so dass das Betätigungselement 10 das Kugelventil 3 nicht öffnen kann, wodurch der Farbzufluss 2 versperrt wird. Die über den Farbabfluss 7 abfließende Farbe 7 führt dann zu einer Verringerung des Farbdrucks in der Farbkammer 8, bis der Farbdruck in der Farbkammer 8 gleich dem Steuerluftdruck in der Steuerluftkammer 13 ist, woraufhin sich die Membran 9 mit dem Betätigungsdorn 10 nach unten biegt. Das Kugelventil 3 wird jedoch von dem Betätigungsdorn 10 erst dann geöffnet, wenn der Druck in der Steuerluftkammer 13 größer ist als die Summe aus dem Druck in der Farbkammer 8 und dem zum Überwinden der Federkraft der Ventilfeder 6 erforderlichen Druck. Falls dies der Fall ist, so öffnet das Kugelventil 3 und der Farbzufluss 2 wird freigegeben, woraufhin der Druck in der Farbkammer 8 wieder ansteigt. Der Farbdruckregler 1 regelt den Druck in der Farbkammer 8 und damit den Druck der ausgangsseitig abgegebenen Farbe also auf einen Sollwert, der durch den Steuerluftdruck in der Steuerluftkammer 13 vorgegeben wird.

Weiterhin weist der Farbdruckregler 1 in diesem Ausführungsbeispiel eine Sperrluftkammer 14 auf, wobei der Druck in der Sperrluftkammer 14 über einen Sperrluftzufluss eingestellt werden kann, der in dieser Querschnittsansicht nicht erkennbar ist. In der Sperrluftkammer 14 ist eine weitere flexible Membran 15 angeordnet, die mittig ebenfalls eine in axialer Richtung durchgehende Öffnung aufweist, wobei in der Öffnung der Membran 15 ein Betätigungselement 16 angeordnet ist, das aus zwei miteinander verschraubten Teilen besteht und die Öffnung in der Membran 15 abdichtet. Zwischen dem Betätigungselement 16 und dem Betätigungselement 10 ist hierbei ein axial verschiebbarer Stift 17 angeordnet, der eine Übertragung der Bewegung des Betätigungselements 16 auf das Betätigungselement 10 ermöglicht. Dies ist bei einem Molchvorgang wünschenswert, da dann der Lack in umgekehrter Richtung durch den Farbdruckregler 1 fließt, so dass das Kugelventil 3 sicher öffnen muss. Der Sperrluftdruck in der Sperrluftkammer 14 wird dann so weit erhöht, dass sich die Membran 15 mit dem Betätigungselement 16 nach unten biegt und den Stift 17 gegen den Betätigungsdorn 10 drückt, wodurch schließlich die Ventilkugel 5 aus ihrem Sitz gedrückt wird und das Kugelventil 3 öffnet.

Eine wesentliche Besonderheit des hier dargestellten Farbdruckreglers 1 besteht darin, dass die Membran 9 zwischen der Farbkammer 8 und der Steuerluftkammer 13 zwei Membranschichten 9.1 und 9.2 aufweist, wodurch die Leckagesicherheit wesentlich erhöht wird. Zwischen den beiden Membranschichten 9.1, 9.2 befindet sich hierbei ein Membranzwischenraum, in den an dem Außenrand der Membran 9 eine Stichbohrung 18 mündet, die an der Außenseite des Farbdruckreglers 1 in einen Sensoranschluss 19 übergeht. An den Sensoranschluss 19 kann beispielsweise ein Drucksensor angeschlossen werden, der den Druck in dem Membranzwischenraum zwischen den beiden Membranschichten 9.1, 9.2 der Membran 9 misst.

Die Montage der Membran 9 erfolgt hierbei zwischen zwei stirnseitig aneinander angrenzenden Gehäuseteilen 20, 21, zwischen denen die Membran 9 eingespannt ist. Das Gehäuseteil 20 weist hierbei eine Vertiefung in Form einer umlaufenden Stufe auf, die an der unteren Stirnseite des Gehäuseteils 20 innen angeformt ist. In dieser Vertiefung liegt die Membran 9, wobei die Vertiefung in dem Gehäuseteil 20 im montierten Zustand mit der Membran 9 eine Presspassung bildet, um den Membranzwischenraum abzudichten.

## Patentansprüche

1. Druckstellglied (1), insbesondere Farbdruckregler für eine Lackieranlage, mit
a) einer ersten Membran (9) mit mindestens zwei Membranschichten (9.1, 9.2) und einem Membranzwischenraum zwischen den Membranschichten (9.1, 9.2),
b) einer Farbkammer (8), die von der ersten Membran (9) begrenzt wird,
c) einer Steuerluftkammer (13), die gegenüber der Farbkammer durch die erste Membran abgetrennt ist,
d) einem ersten Betätigungselement (10), das in der ersten Membran (9) angeordnet ist,
e) einem Sensoranschluss (19) zur Erkennung einer Membranundichtigkeit durch einen Sensor, wobei der Sensoranschluss (19) in den Membranzwischenraum der ersten Membran (9) mündet,
**gekennzeichnet durch**
f) eine Sperrluftkammer (14) mit einem Sperrluftzufluss, wobei der Druck in der Sperrluftkammer (14) über den Sperrluftzufluss einstellbar ist,
g) eine flexible zweite Membran (15), die in der Sperrluftkammer (14) angeordnet ist,
h) ein zweites Betätigungselement (16), das in der zweiten Membran (15) angeordnet ist,
i) einen axial verschiebbaren Stift (17), der zwischen dem ersten Betätigungselement (10) und dem zweiten Betätigungselement (16) angeordnet ist und eine Übertragung der Bewegung des zweiten Betätigungselements (16) auf das erste Betätigungselement (10) ermöglicht.

2. Druckstellglied (1) nach Anspruch 1, **dadurch gekennzeichnet, dass** die erste Membran (9) mindestens drei Membranschichten (9.1, 9.2) aufweist, wobei der Sensoranschluss (19) in den Membranzwischenraum zwischen den beiden Membranschichten (9.1, 9.2) mündet, die dem Fluid zugewandt sind.

3. Druckstellglied (1) nach Anspruch 1 oder 2, **gekennzeichnet durch** zwei stirnseitig aneinander anliegende Gehäuseteile (20, 21), zwischen denen die erste Membran (9) eingespannt ist, wobei in einem der beiden Gehäuseteile (20, 21) eine Stichbohrung (18) angeordnet ist, die innen in den Membranzwischenraum und außen in den Sensoranschluss (19) mündet.

4. Druckstellglied (1) nach Anspruch 3, **dadurch gekennzeichnet, dass** eines der beiden Gehäuseteile (20, 21) an der dem anderen Gehäuseteil (21) zugewandten Stirnseite eine Vertiefung aufweist, in der die erste Membran (9) angeordnet ist.

5. Druckstellglied (1) nach Anspruch 4, **dadurch gekennzeichnet, dass** die Vertiefung in dem einen Gehäuseteil (20) im montierten Zustand mit der ersten Membran (9) eine Presspassung oder eine Übergangspassung bildet.

6. Druckstellglied (1) nach mindestens einem der vorhergehenden Ansprüche, **dadurch gekennzeichnet, dass** das erste Betätigungselement (10) zwei aneinander angrenzende Teile (10, 12) aufweist, zwischen denen die erste Membran (9) eingespannt ist.

7. Druckstellglied (1) nach Anspruch 6, **dadurch gekennzeichnet, dass** die beiden Teile (10, 12) des ersten Betätigungselements miteinander verschraubbar sind.

8. Druckstellglied (1) nach mindestens einem der vorhergehenden Ansprüche, **dadurch gekennzeichnet, dass** der Sensor in dem Membranzwischenraum angeordnet ist, während der Sensoranschluss außerhalb des Membranzwischenraums angeordnet ist, wobei der Sensor über eine elektrische Leitung oder eine optische Leitung mit dem Sensoranschluss (19) verbunden ist.

9. Druckstellglied (1) nach mindestens einem der vorhergehenden Ansprüche, **dadurch gekennzeichnet, dass** der Sensoranschluss (19) über eine Hohlleitung mit dem Membranzwischenraum verbunden ist.

10. Druckstellglied (1) nach mindestens einem der vorhergehenden Ansprüche, **dadurch gekennzeichnet, dass** mindestens eine der Membranschichten (9.1, 9.2) mindestens teilweise aus PTFE besteht.

11. Druckstellglied (1) nach mindestens einem der vorhergehenden Ansprüche, **gekennzeichnet durch** eine Ausbildung als Druckregler, Ventil oder Druckminderer.

## Claims

1. Pressure adjusting device (1), in particular a paint pressure regulator for a painting installation, with
a) a first diaphragm (9) with at least two diaphragm layers (9.1, 9.2) and a diaphragm gap between the diaphragm layers (9.1, 9.2),
b) a paint chamber (8) which is delimited by the first diaphragm (9),
c) a control air chamber (13) which is separated from the paint chamber by the first diaphragm,
d) a first actuating element (10) which is disposed in the first diaphragm (9),
e) a sensor connection (19) for recognition of a leakage of the diaphragm by a sensor, the sensor connection (19) opening into the diaphragm gap of the first diaphragm (9),
**characterised by**
f) a confining air chamber (14) with an inflow of confining air, wherein the pressure in the confining air chamber (14) is adjustable by way of the inflow of confining air,
g) a flexible second diaphragm (15) which is disposed in the confining air chamber (14),
h) a second actuating element (16) which is disposed in the second diaphragm (15),
i) an axially displaceable pin (17) which is disposed between the first actuating element (10) and the second actuating element (16) and allows a transmission of the movement of the second actuating element (16) to the first actuating element (10).

2. Pressure adjusting device (1) as claimed in Claim 1, **characterised in that** the first diaphragm (9) at least three diaphragm layers (9.1, 9.2), wherein the sensor connection (19) opens into the diaphragm gap between the two diaphragm layers (9.1, 9.2) which face the fluid.

3. Pressure adjusting device (1) as claimed in Claim 1 or 2, **characterised by** two housing parts (20, 21) which butt against one another on their end faces and between which the first diaphragm (9) is gripped, wherein in one of the two housing parts (20, 21) there is disposed a branch bore (18) which opens internally into the diaphragm gap and externally into the snsor connection (19).

4. Pressure adjusting device (1) as claimed in Claim 3, **characterised in that** one of the two housing parts (20, 21) has on the end face facing the other housing part (21) a depression in which the first diaphragm (9) is disposed.

5. Pressure adjusting device (1) as claimed in Claim 4, **characterised in that** in the installed state the depression in one housing part (20) forms a press fit or a transition fit with the first diaphragm (9).

6. Pressure adjusting device (1) as claimed in at least one of the preceding claims, **characterised in that** the first actuating element (10) has two parts (10, 12) adjoining one another between which the first diaphragm (9) is gripped.

7. Pressure adjusting device (1) as claimed in Claim 6, **characterised in that** the two parts (10, 2) of the first actuating element can be screwed to one anther.

8. Pressure adjusting device (1) as claimed in at least one of the preceding claims, **characterised in that** the sensor is disposed in the diaphragm gap, whilst the sensor connection is disposed outside the diaphragm gap, wherein the sensor is connected to the sensor connection (19) by way of an electric line or an optical line.

9. Pressure adjusting device (1) as claimed in at least one of the preceding claims, **characterised in that** the sensor connection (19) is connection to the diaphragm gap by way of a hollow line.

10. Pressure adjusting device (1) as claimed in at least one of the preceding claims, **characterised in that** at least one of the diaphragm layers (9.1, 9.2) is made at least partially of PTFE.

11. Pressure adjusting device (1) as claimed in at least one of the preceding claims, **characterised by** a construction as a pressure regulator, valve or pressure reducer.

## Revendications

1. Composant de réglage de pression (1), notamment régulateur de pression de peinture pour une installation de peinture, avec
a) une première membrane (9) avec au moins deux couches de membrane (9.1, 9.2) et un interstice de membrane entre les couches de membrane (9.1, 9.2),
b) un compartiment à peinture (8) délimité par la première membrane (9),
c) un compartiment à air de commande (13) séparé du compartiment à peinture (8) par la première membrane,
d) un premier élément d'actionnement (10) disposé dans la première membrane (9),
e) une prise pour capteur (19) pour la détection par un capteur d'une inétanchéité de membrane, la prise pour capteur (19) débouchant dans l'interstice de la première membrane (9),
**caractérisé par**
f) un compartiment à air d'arrêt (14) avec une amenée d'air d'arrêt, la pression dans le compartiment à air d'arrêt (14) étant réglable au moyen de l'amenée d'air d'arrêt,
g) une deuxième membrane flexible (15) disposée dans le compartiment à air d'arrêt (14),
h) un deuxième élément d'actionnement (16) disposé dans la deuxième membrane (15),
i) un plongeur (17) axialement déplaçable disposé entre le premier élément d'actionnement (10) et le deuxième élément d'actionnement (16) et permettant une transmission du mouvement du deuxième élément d'actionnement (16) sur le premier élément d'actionnement (10).

2. Composant de réglage de pression (1) selon la revendication 1, **caractérisé en ce que** la première membrane (9) comporte au moins trois couches de membrane (9.1, 9.2), la prise pour capteur (19) débouchant dans l'interstice entre les deux couches de membrane (9.1, 9.2) orientées vers le fluide.

3. Composant de réglage de pression (1) selon la revendication 1 ou 2, **caractérisé par** deux pièces de carter (20, 21) frontalement accotées, entre lesquelles la première membrane (9) est serrée, un perçage (18) étant disposé dans une des deux pièces de carter (20, 21), lequel débouche intérieurement dans l'interstice de membrane et extérieurement dans la prise pour capteur (19).

4. Composant de réglage de pression (1) selon la revendication 3, **caractérisé en ce qu'**une des deux pièces de carter (20, 21) présente un évidement sur la face frontale dirigée vers l'autre pièce de carter (21), dans lequel la première membrane (9) est disposée.

5. Composant de réglage de pression (1) selon la revendication 4, **caractérisé en ce que** l'évidement dans la première pièce de carter (20) forme un ajustement serré ou un ajustement de transition avec la première membrane (9) en état de montage.

6. Composant de réglage de pression (1) selon l'une des revendications précédentes au moins, **caractérisé en ce que** le premier élément d'actionnement (10) présente deux pièces (10, 12) adjacentes, entre lesquelles la première membrane (9) est serrée.

7. Composant de réglage de pression (1) selon la revendication 6, **caractérisé en ce que** les deux pièces (10, 12) du premier élément d'actionnement (10) sont vissables entre elles.

8. Composant de réglage de pression (1) selon l'une des revendications précédentes au moins, **caractérisé en ce que** le capteur est disposé dans l'interstice de membrane, alors que la prise pour capteur est disposée à l'extérieur de l'interstice de membrane, le capteur étant relié à la prise pour capteur (19) par un câble électrique ou un câble optique.

9. Composant de réglage de pression (1) selon l'une des revendications précédentes au moins, **caractérisé en ce que** la prise pour capteur (19) est relié à l'interstice de membrane par un câble creux.

10. Composant de réglage de pression (1) selon l'une des revendications précédentes au moins, **caractérisé en ce qu'**au moins une des couches de membrane (9.1, 9.2) est au moins partiellement fabriquée en PTFE.

11. Composant de réglage de pression (1) selon l'une des revendications précédentes au moins, **caractérisé par** une configuration en tant que régulateur de pression, de clapet ou de détendeur.
